## Europäisches Patentamt
## European Patent Office
## Office européen des brevets

(19)

(11) Numéro de publication: **0 177 658**
**B1**

(12) **FASCICULE DE BREVET EUROPEEN**

(45) Date de publication du fascicule du brevet:
**17.11.88**

(51) Int. Cl.⁴: **H 02 K 7/18, H 02 P 9/42**

(21) Numéro de dépôt: **84810492.3**

(22) Date de dépôt: **09.10.84**

(54) Groupe électrogène de chantier.

(43) Date de publication de la demande:
**16.04.86 Bulletin 86/16**

(45) Mention de la délivrance du brevet:
**17.11.88 Bulletin 88/46**

(84) Etats contractants désignés:
**AT BE CH DE FR GB IT LI NL SE**

(56) Documents cités:
**DE - C - 683 106**
**DE - U - 7 217 369**
**FR - A - 2 406 093**

(73) Titulaire: **Rivkine, Jacques, 33, chemin Moise Duboule, CH-1209 Grand-Saconnex (Genève) (CH)**

(72) Inventeur: **Rivkine, Jacques, 33, chemin Moise Duboule, CH-1209 Grand-Saconnex (Genève) (CH)**

(74) Mandataire: **Ardin, Pierre et al, PIERRE ARDIN & CIE 22, rue du Mont-Blanc Case postale 60, CH-1211 Genève 1 (CH)**

ACTORUM AG

## Description

On connaît déjà des groupes électrogènes de chantier comprenant un bâti portant un générateur électrique et un moteur à combustion interne ou à explosion pour entraîner le générateur, ce dernier étant agencé pour délivrer du courant alternatif monophasé et/ou triphasé à la tension et à la fréquence du réseau local. Un groupe électrogène de ce type est décrit par exemple dans le brevet allemand N° DE-V-7 217 369.

Sur les chantiers, en plus des machines qui sont prévues pour être alimentées en courant électrique triphasé ou monophasé par le réseau local, il existe certaines machines, telles que les aiguilles vibrantes et vibrateurs à béton, les marteaux piqueurs, etc., qui doivent être alimentées par un courant spécial, le plus souvent un courant monophasé ou triphasé de 42 V. à une fréquence de 200 Hz. Pour la fourniture de ce courant particulier, les entreprises ont recours à un autre groupe électrogène comprenant un moteur à essence ou à huile lourde, entraînant un générateur prévu pour la fourniture de ce courant.

L'invention a pour but de diminuer les investissements en matériel et d'offrir une plus grande facilité d'emploi, notamment lors des travaux de bétonnage, en permettant simultanément l'emploi des différents engins nécessaires à l'exécution de ces travaux, soit: aiguilles vibrantes, talocheuses, règles vibrantes, bétonnières, éclairages, etc.

A cet effet, le groupe électrogène de chantier selon l'invention est caractérisé en ce qu'il comprend en outre un convertisseur électrique, des connexions et un interrupteur pour relier l'entrée de ce convertisseur à une sortie du générateur, la sortie de ce convertisseur fournissant un courant à fréquence plus élevée que celle du réseau.

Le dessin annexé représente schématiquement, et à titre d'exemple, une forme d'exécution du groupe électrogène faisant l'objet de l'invention.

La figure 1 est une vue latérale de ce groupe électrogène.

La figure 2 est une vue en bout de ce groupe.

La figure 3 en est un schéma électrique général.

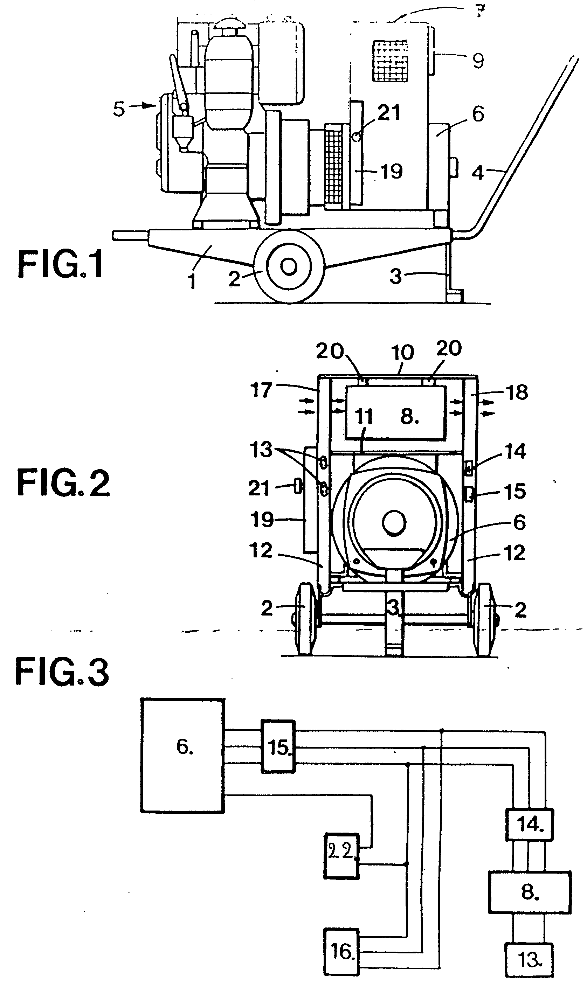

En référence aux figures 1 et 2, le groupe électrogène est monté sur un châssis 1, muni de deux roues 2, d'une béquille 3, un organe 4 formant manche pour déplacer le châssis 1. Le bâti 1 porte un moteur à essence 5, accouplé à un générateur 6 agencé pour fournir du courant triphasé à 380 V. et 50 Hz. Bien entendu, le moteur comprend un dispositif régulateur de sa vitesse de rotation pour maintenir dans les tolérances habituelles la fréquence de 50 Hz du générateur 6. Ce dispositif régulateur ne sera pas décrit en détail car il s'agit d'une construction bien connue dans la technique et qui ne fait pas partie de l'invention.

Le générateur 6 est recouvert en partie par un boîtier 7 contenant un convertisseur 8 et portant un tableau 9, muni de prises de courant pour permettre l'alimentation des engins de chantier à 220 et 380 V. Le convertisseur 8 est du type comprenant un moteur électrique triphasé et entraînant un générateur monophasé ou triphasé dont la tension de sortie est de 42 V. à 200 Hz. En général, dans les convertisseurs de ce genre, le moteur électrique et le générateur sont montés sur un même arbre et logés dans un même carter.

Comme le montre la figure 2, dans laquelle le tableau 9 a été supprimé pour permettre la représentation du convertisseur 8, ce dernier est suspendu par des éléments élastiques 20 à la paroi supérieure 10 du boîtier 7. En-dessous du convertisseur 8, une plaque 11 traverse le boîtier 7 et constitue un écran thermique mettant le convertisseur 8 à l'abri de la chaleur dégagée par la génératrice 6. Le boîtier 7 présente à la partie supérieure de chacune de ses faces latérales des ouvertures 17 et 18 pour le passage de l'air de ventilation du convertisseur 8. L'avantage de cette ventilation transversale est d'éviter le plus possible une reprise de l'air qui a servi à la ventilation de la génératrice.

Le boîtier 7 est renforcé par des montants 12 dont l'un porte deux prises 13 pour le courant à 200 Hz., 42 V. L'autre montant porte un interrupteur 14 et un disjoncteur thermique 15, réenclenchable. Sur un côté, le boîtier 7 porte encore un manchon tubulaire 19, muni d'un bouton de serrage 21, pour permettre la fixation du tube-support d'un projecteur.

Comme le montre la figure 3, l'entrée du convertisseur 8 est reliée au courant triphasé fourni par le générateur 6, par l'intermédiaire de l'interrupteur 14 qui comprend un disjoncteur thermique. La sortie du convertisseur est connectée aux prises électriques 13.

Le courant triphasé fourni par le générateur 6 est amené à une prise 16, tandis qu'une phase de ce courant est dérivée sur une prise 22.

La puissance nécessaire pour faire fonctionner une aiguille vibrante à béton est sensiblement plus faible que celle de l'entraînement des moteurs triphasés des machines de chantier nécessaires lors du bétonnage, notamment des bétonnières, talocheuses, règles vibrantes, éclairages etc. Pour cette raison, la puissance du convertisseur est comprise de préférence entre 10 et 35% de la puissance du générateur 6. En général, on désire disposer d'une puissance de 1 à 3 kW pour une ou plusieurs vibreuses à béton, tandis qu'il faut disposer d'environ 5 à 7 kW pour l'entraînement des machines de chantier.

Il est intéressant de surdimensionner le générateur 6 pour qu'il soit en mesure de fournir une puissance de 6 à 10 kW environ, ce qui permet d'alimenter en même temps une bétonnière, un projecteur et une ou plusieurs vibreuses à béton, sans surcharge de l'ensemble du groupe électrogène.

On peut bien entendu prévoir de nombreuses variantes d'exécution, notamment en ce qui concerne l'emplacement du convertisseur 8, celui-ci pouvant aussi être prévu pour fournir un courant triphasé si un tel courant est désiré. Ce convertisseur 8 pourrait d'ailleurs présenter des sorties pour des courants à 200 Hz. en monophasé et en triphasé. Enfin, il est clair que tout le groupe électrogène pourrait être monté simplement sur un

châssis-luge, destiné à être transporté au moyen d'une remorque pour être déchargé sur le lieu des travaux.

## Revendications

1. Groupe électrogène de chantier, comprenant un bâti (1) portant un générateur électrique (6) et un moteur à combustion interne ou à explosion (5) pour entraîner le générateur (6), ce dernier étant agencé pour délivrer du courant alternatif monophasé et/ou triphasé à la tension et à la fréquence du réseau local, caractérisé en ce qu'il comprend en outre un convertisseur électrique (8), des connexions et un interrupteur (14) pour relier l'entrée de ce convertisseur à une sortie du générateur (6), la sortie de ce convertisseur (8) fournissant un courant à fréquence plus élevée que celle du réseau.

2. Groupe selon la revendication 1, caractérisé en ce que les connexions entre le générateur (6) et le convertisseur (8) comprennent un disjoncteur thermique (15).

3. Groupe selon la revendication 2, caractérisé en ce que le convertisseur (8) est monté dans un boîtier (7), au-dessus du générateur (6), ce boîtier (7) recouvrant une partie du générateur (6).

4. Groupe selon la revendication 3, caractérisé en ce que au moins une paroi (12) du boîtier (7) porte des prises de courant (13) reliées au générateur (6) et respectivement au convertisseur (8).

5. Groupe selon la revendication 2, 3 ou 4, caractérisé en ce que la puissance du convertisseur (8) est comprise entre 10 et 35% de la puissance du générateur (6).

6. Groupe selon l'une des revendications précédentes, caractérisé en ce que le convertisseur (8) est du type rotatif comprenant un moteur électrique triphasé et entraînant un générateur (6) fournissant un courant à une fréquence d'au moins 200 Hz.

## Patentansprüche

1. Stromerzeugendes Baustellenaggregat, umfassend einen Rahmen (1), der einen Stromgenerator (6) und einen Verbrennungs- oder Explosionsmotor (5) für den Antrieb des Generators (6) trägt, wobei letzterer dazu vorgesehen ist, Einphasen- und/oder Dreiphasenwechselstrom mit der örtlichen Netzspannung und der örtlichen Netzfrequenz zu erzeugen, dadurch gekennzeichnet, dass es ausserdem einen elektrischen Wandler (8), Verbindungen und einen Schalter (4) umfasst, um den Eingang dieses Wandlers mit dem Ausgang des Generators (6) zu verbinden, wobei der Ausgang dieses Wandlers (8) einen Strom abgibt, dessen Frequenz höher ist als die Netzfrequenz.

2. Aggregat nach Anspruch 1, dadurch gekennzeichnet, dass die Verbindungen zwischen dem Generator (6) und dem Wandler (8) einen Wärmeschutzschalter (15) umfassen.

3. Aggregat nach Anspruch 2, dadurch gekennzeichnet, dass der Wandler (8) in einem Gehäuse (7) oberhalb des Generators (6) angeordnet ist, wobei dieses Gehäuse (7) einen Teil des Generators (6) bedeckt.

4. Aggregat nach Anspruch 3, dadurch gekennzeichnet, dass mindestens eine Wand (12) des Gehäuses (7) Stromanschlüsse (13) trägt, die mit dem Generator (6) bzw. mit dem Wandler (8) verbunden sind.

5. Aggregat nach Anspruch 2, 3 oder 4, dadurch gekennzeichnet, dass die Leistung des Wandlers (8) zwischen 10 und 35% der Leistung des Generators (6) beträgt.

6. Aggregat nach einem der vorhergehenden Ansprüche, dadurch gekennzeichnet, dass der Wandler (8) ein Rotationswandler ist, der einen Dreiphasen-Elektromotor umfasst und einen Generator (6) antreibt, der Strom mit einer Frequenz von mindestens 200 Hz erzeugt.

## Claims

1. Generator set for use on a building site, comprising a frame (1) carrying an electric generator (6) and an internal combustion or an explosion engine (5) for driving the generator (6), the latter being designed to supply single-phase and/or three-phase alternating current at the voltage and frequency of the local mains supply, characterized in that it further comprises an electrical converter (8), connections and a switch (14) for connecting the inlet of the converter to an outlet of the generator (16), the outlet of the converter (8) providing a current at a higher frequency than that of the mains supply.

2. Set according to claim 1, characterized in that the connections between the generator (6) and the converter (8) include a thermal circuit breaker (15).

3. Set according to claim 2, characterized in that the converter (8) is mounted in a casing (7) above the generator (6), this casing (7) covering a portion of the generator (6).

4. Set according to claim 3, characterized in that at least one wall (12) of the casing (7) carries sockets (13) variously connected to the generator (6) and respectively to the converter (8).

5. Set according to claim 2, 3 or 4, characterized in that the power of the converter (8) is from 10 to 35% of the power of the generator (6).

6. Set according to one of the previous claims, characterized in that the converter (8) is of the rotary type, comprising a three-phase electric motor and driving a generator (6) which provides a current at a frequency of at least 200 Hz.

*1/1*

**FIG.1**

**FIG.2**

**FIG.3**